Europäisches Patentamt

European Patent Office

Office européen des brevets

(19)

(11) **EP 1 431 784 A1**

(12) **EUROPEAN PATENT APPLICATION**
published in accordance with Art. 158(3) EPC

(43) Date of publication:
**23.06.2004 Bulletin 2004/26**

(51) Int Cl.⁷: **G02B 6/00**, D01F 8/10

(21) Application number: **02762932.8**

(22) Date of filing: **30.08.2002**

(86) International application number:
**PCT/JP2002/008800**

(87) International publication number:
**WO 2003/019252 (06.03.2003 Gazette 2003/10)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **31.08.2001 JP 2001264477
19.02.2002 JP 2002041644**

(71) Applicants:
• **Fuji Photo Film Co. Ltd.
Kanagawa 250-0193 (JP)**
• **KOIKE, Yasuhiro
Kanagawa 225-0024 (JP)**

(72) Inventors:
• **KOIKE, Yasuhiro
Aoba-ku, Yokohama-shi, Kanagawa 225-0024
(JP)**

• **SATOU, Masataka, FUJI PHOTO FILM CO., LTD.
Fujinomiya-shi, Shizuoka 418-8666 (JP)**
• **MIYOSHI, Takahito, FUJI PHOTO FILM CO., LTD.
Fujinomiya-shi, Shizuoka 418-8666 (JP)**
• **SHIROKURA, Yukio,
FUJI PHOTO FILM CO., LTD.
Fujinomiya-shi, Shizuoka 418-8666 (JP)**
• **OGURA, Tohru, FUJI PHOTO FILM CO., LTD.
Fujinomiya-shi, Shizuoka 418-8666 (JP)**

(74) Representative: **Klunker, Hans-Friedrich, Dr. et al
Patentanwälte
Klunker . Schmitt-Nilson . Hirsch
Winzererstrasse 106
80797 München (DE)**

(54) **PROCESS FOR PRODUCTION OF PLASTIC OPTICAL MEMBERS**

(57)   The present invention discloses a method for producing plastic optical member comprising a core region and a clad region. The method comprises carrying out polymerization of a polymerizable monomer, thereby obtaining an area corresponding to the core region. The Polymerization is carried out in the presence of a polymerization initiator having a ten-hour, half-life decomposition temperature $T_h$ (°C) ($T_b - 20 \leqq T_h$; $T_b$ is the boiling point (°C) of the polymerizable monomer), at an initial polymerization temperature $T_1$ (°C) ($T_b -10 \leqq T_1 \leqq T_g$; $T_g$ is the glass transition point (°C) of the polymer made of the polymerizable monomer), for a period which is equal to or longer than 10% of the half-life of the polymerization initiator at $T_1$; and further carried out at an elevated temperature $T_2$ (°C) ($T_g \leqq T_2$ and $T_1 < T_2$).

**Description**

Technical Field

The present invention belongs to a technical field of method for producing plastic optical member, and in particular belongs to a technical field of method for producing plastic optical member preferably applicable to plastic optical transmission material having distributed refractive index.

Background Art

In recent years, plastic optical member is widely used for various applications including optical fiber and optical lens, by virtue of its advantages such that allowing more simple producing and processing at a lower cost as compared with quartz-base optical member having the same structure. The plastic optical fiber is slightly inferior to quartz-base fiber since the entire portion of the element fiber thereof is made of plastic material and has, as a consequence, a little larger transmission loss, but superior to the quartz-base optical fiber in that having an excellent flexibility, lightweight property, workability, better applicability in producing a large bore diameter fiber and a lower cost. The plastic optical fiber is thus studied as a transmission medium for optical communication which is effected over a distance relatively as short as allowing such large transmission loss to be ignored.

The plastic optical fiber generally has a center core (referred to as "cone region" in the specification) made of an organic compound and comprises a polymer matrix, and an outer shell (referred to as "clad region" in the specification) made of an organic compound having a refractive index differing from (generally lower than) that of the core region. The plastic optical fiber is obtained generally by forming a fiber base member (referred to as "preform" in the specification) and then drawing the preform. In particular, the plastic optical fiber having a distributed refractive index along the direction from the center to the outside thereof recently attracts a good deal of attention as an optical fiber which can ensure a high transmission capacity. As one exemplary method for producing the plastic optical fiber having a distributed refractive index, a method based on the interfacial gel polymerization process is disclosed in International Patent Publication No. WO93/08488. In a specific procedure, a polymerizable monomer such as methyl methacrylate (MMA) is placed in a polymerization vessel having a sufficient rigidity, which monomer is then polymerized while rotating the vessel to thereby form a cylinder made of a polymer such as poly methacrylate (PMMA). The cylinder corresponds to the clad region. In the hollow space of the cylinder, a monomer such as MMA, which is a source material for the core region, a polymerization initiator, a chain transfer agent, a refractive index adjusting agent and so forth are placed, and interfacial gel polymerization of the mixture is allowed to proceed in the inner space of the cylinder so as to produce the core region, to thereby obtain the preform. The core region thus formed by the interfacial gel polymerization process has a concentration distribution of the refractive index adjuster or so contained therein, and based on which concentration distribution a distribution in the refractive index is produced. Drawing of thus-obtained preform in a hot atmosphere of 180°C to 250°C or around will produce the plastic optical fiber having a distributed refractive index.

In the above process for producing the preform, the distribution of refractive index is produced in the structure as a result of a series of complicated polymerization reactions. With progress of the polymerization reactions, boundary between areas having different refractive indices is likely to have formed therein voids or air bubbles due to mass shrinkage and/or difference in the thermal behaviors, which results in various nonconformities such as lowered productivity caused by failure in obtaining a desired diameter of the fiber or by breakage of the stretched fiber, and degraded performance of the obtained plastic optical fiber.

In an exemplary case where a distribution of refractive index is introduced into the structure in the process of forming the polymer-made core region through polymerization, the areas differing in the refractive indices also differ with each other in the thermal property, so that in some cases a desirable distribution of the refractive index cannot be introduced into the structure depending on conditions for the polymerization. Some polymerization conditions may be even causative of voids or micro-gaps undesirably generated in the preform, or may considerably degrade the transmissivity of light of the plastic optical fiber due to fluctuation in the density thereof. This consequently degrades the light transmission property of the optical fiber, and considerably lowers the productivity of the plastic optical fiber depending on the polymerization conditions.

Disclosure of the Invention

The present invention is to provide a method for producing plastic optical member having excellent properties in a stable and highly productivity.

One aspect of the present invention relates to a method for producing plastic optical member comprising a core region and a clad region differing with each other in refractive index, which comprises a polymerization step of carrying out polymerization of a polymerizable monomer in the presence of a polymerization initiator at an initial polymerization temperature $T_1$ (°C) for a period which is equal to or longer than 10% of the half-life of the polymerization initiator at the initial polymerization temperature $T_1$ (°C), thereby obtaining an area corresponding to said core region, wherein

said initiator has a ten-hour, half-life decomposition temperature $T_h$ (°C) satisfying the relation below;

and the initial polymerization temperature $T_1$ (°C) satisfies the relation below:

$$T_b - 20 \leqq T_h$$

$$T_b - 10 \leqq T_1 \leqq T_g$$

(where, $T_b$ is the boiling point (°C) of the polymerizable monomer, and $T_g$ is the glass transition point (°C) of the polymer made of the polymerizable monomer).

The other aspect of the present invention relates to a method for producing plastic optical member comprising a core region and a clad region differing with each other in refractive index, which comprises a polymerization step of carrying out polymerization of a polymerizable monomer at the initial polymerization temperature $T_1$ (°C) which satisfies the relation below, and at subsequent temperature $T_2$ (°C) which satisfies the relation below, thereby obtaining an area corresponding to said core region:

$$T_g \leqq T_2$$
$$T_1 < T_2$$

(where, $T_g$ is the glass transition point (°C) of the polymer made of the polymerizable monomer).

The present invention is successful in suppressing generation of air bubbles and micro-gap in an area corresponding to the core region by controlling the polymerization temperature during the formation of such core region, and in raising the productivity.

A low water content of the polymerizable monomer and polymerization initiator used in the polymerization step is advantageous in that considerably reducing the water content remaining in the core region, which typically suppresses generation of air bubbles in the fiber during thermal drawing of the preform, and can further improve the productivity of plastic optical fiber. The water content of the polymerizable monomer is preferably 0.01 wt% or less, and that of the polymerization initiator is preferably 2 wt% or less.

Using a low-water-content polymerizable monomer is also preferable when the area corresponding to the clad region is formed, where a preferable water content of the polymerizable monomer for forming the clad region is 0.01 wt% or less.

One preferable embodiment of the method for producing plastic optical member according to the present invention is such that the polymerization in the polymerization step is carried out in a hollow portion of a structure corresponding to the clad region so as to produce therein the area corresponding to the core region. This is an embodiment using interfacial gel polymerization process.

In this embodiment, the area corresponding to the core region is preferably formed by carrying out the polymerization within a hollow portion of the structure while supporting the structure corresponding to the clad region using a jig which has a hollow space into which such structure can be inserted. Carrying out the polymerization with the aid of the jig successfully prevents the structure from being deformed under pressure, since the structure is kept as being inserted in the hollow space of the jig when the polymerization progresses. Although the area corresponding to the core region tends to shrink as the pressurized polymerization proceeds, the structure is supported as being inserted into the jig in a non-adhered manner, so that the structure can uniformly relax the shrinkage of the area corresponding to the core region, and thus successfully reduce the generation of voids caused by shrinkage of such area. This contributes to reduction in morphological changes in the preform, and thus to improvement in the productivity. In particular for the case where the plastic optical fiber having a distributed refractive index is to be produced, suppression of the morphological changes of the preform ensures that the distribution profile of refractive index is kept uniform, which ensures production of the plastic optical fiber having an excellent light transmission property in a highly productive manner.

The hollow space of the jig preferably has a diameter larger than the outer diameter of the structure by 0.1% to 40%. It is also preferable that the jig has an adhesion preventive layer or a lubricating layer on the inner surface of the hollow space thereof or in a gap portion formed between the hollow space of the jig and the structure inserted therein.

The producing method of the present invention is appropriate for producing plastic optical member in which the area corresponding to the core region has a distribution of refractive index along the direction from the center to the outside thereof.

It is to be noted that in this specification, expression of "has a distribution of refractive index along the direction from the center to the outside" permits any cases provided that the area has a distribution of refractive index specifically along the direction. Thus in an exemplary case where the area corresponding to the core region has a cylindrical form, it is only required that the distribution of refractive index is found along the radial direction of the cylinder, but it is not necessary that the distribution of refractive index is also found in the longitudinal direction thereof.

It is also to be noted that the term "plastic optical member" should be understood in the broadest sense, where a general idea thereof covers not only plastic optical fiber obtained by drawing processing, but also covers an entire range of plastic optical members such as optical lens and optical waveguide.

Brief Description of the Drawing

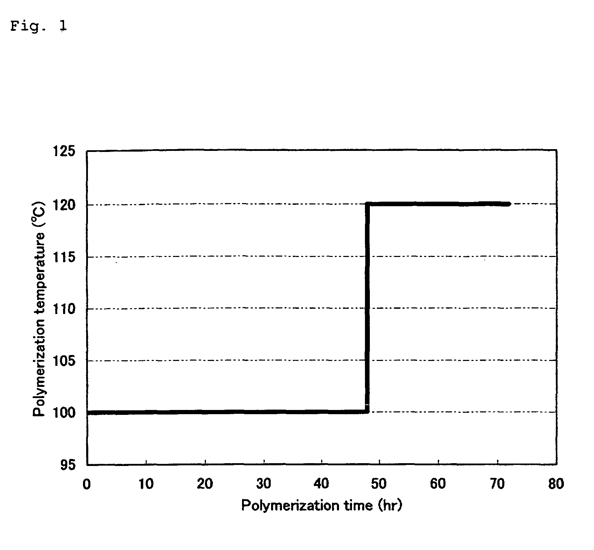

Fig. 1 is a graph showing an exemplary pattern of temperature rise in the polymerization in Example 1.

Embodiment for Carrying Out the Invention

The present invention will be detailed below.

The present invention can provide plastic optical members in various forms, first by producing a preform, and then processing such preform suited for applications. For example, drawing the preform gives optical fiber, and slicing it along the sectional direction gives light guide member. For the latter case, using a preform having a distribution of refractive index can further yield lens.

The description now begins with various source materials of the plastic optical member used for the producing method of the present invention.

In the present invention, the clad region of the plastic optical member is made of a polymer. The clad region preferably has a refractive index smaller than that of the core region in order to confine light signal to be transmitted within the core region, and has a transparency for the light to be transmitted. Examples thereof include homopolymers as disclosed in the International Patent Publication WO93/08488 such as polymethyl methacrylate (PMMA), deuterium-substituted polymethyl methacrylate (PMMA-d8), polytrifluoroethyl methacrylate (P3FMA) and polyhexafluoroisopropyl-2-fluoroacrylate (HFIP 2-FA); copolymers comprising two or more of monomers composing these homopolymers; and mixtures thereof. Typically using a source material same as that used for the polymer composing the core region is preferable in view of ensuring a desirable transparency at the core/clad boundary.

In the present invention, the core region of the plastic optical member is made of a polymer. While there is no specific limitation on source materials for the core region as far as they can ensure transparency for the light to be transmitted, the less the transmission loss of light signal to be transmitted, the more preferable it will use. Examples thereof include (meth)acrylic polymers such as polymethyl methacrylate (PMMA) and copolymers thereof.

For the case where the optical member is intended for near-infrared applications, it is preferable to use a polymer in which hydrogen atom on C-H bond is substituted by deuterium as described in the International Patent Publication M093/08488, since absorption loss due to vibration modes of C-H bond will occur. Other possible examples include polymers of fluorine-substituted monomer; homopolymers such as deuterium-substituted polymethyl methacrylate (PMMA-d8), polytrifluoroethyl methacrylate (P3FMA), polyhexafluoroisopropyl-2-fluoroacrylate (HFIP 2-FA); copolymers comprising two or more of monomers composing these homopolymers; and mixtures thereof. It is preferable to produce the core region by selecting a source material which can readily be polymerized by bulk polymerization, and to compose it with a single polymer.

It is allowable to use a homopolymer, as well as copolymer or mixture thereof, which is made of a monomer having deuterium (D) or halogen atom (X) as a substituent for the hydrogen atom. Light transmission loss due to the overtone absorption of C-H bond occurs in a specific wavelength region, but substituting H with D or X can shift the wavelength region in which such light transmission loss will occur to a longer wavelength region, which substantially reduces the light transmission loss in the practical wavelength region. It is also preferable for these monomers, similarly for the case of the clad region, to reduce impurities or contaminants causing of scattering source in view of preventing the transparency from lowering after polymerization.

In the process of polymerizing to produce the core region and clad region, it is allowable to add a polymerization initiator or a chain transfer agent for the purpose of controlling the polymerization state and polymerization speed, or controlling the molecular weight so as to be suited for the thermal drawing.

The polymerization initiator can properly be selected in consideration of the monomer to be employed. Possible examples thereof include those disclosed in the International Patent Publication WO93/08488, which are benzoyl peroxide (BPO), t-butylperoxy-2-ethylhexanate (PBO) , di-t-butylperoxide (PBD), t-butylperoxyisopropylcarbonate (PBI), and n-butyl-4,4-bis (t-butylperoxy)valerate (PHV) . These polymerization initiators may be used in any combination of two or more species.

The chain transfer agent is used mainly for adjusting molecular weight of the polymer, and can properly be selected in consideration of the monomer to be employed. For the case where a methyl methacrylate-base monomer is used as the polymerizable monomer, preferable chain transfer agents include alkylmercaptans (n-butylmercaptan, n-pentylmercaptan, n-octylmercaptan, n-laurylmercaptan, t-dodecylmercaptan, etc.), thiophenols (thiophenol, m-bromothiophenol, p-bromothiophenol, m-toluenethiol, p-toluenethiol, etc.), all of which being disclosed in the International Patent Publication WO93/08488, where particularly preferable species are alkylmercaptans such as n-octylmercaptan, *n*-laurylmercaptan, and *t*-dodecylmercaptan. It is also allowable to use the chain transfer agent having deuterium substituted for hydrogen atom on C-H bond. These chain transfer agents may be used in any combination of two or more species.

Introduction of distribution of the refractive index into the core region along the direction from the center to the outside thereof is preferable in terms of providing the plastic optical fiber of a distributed refractive index type having a high transmission capacity. The core region having a distributed refractive index can be formed using a refractive index adjusting agent. The refractive index adjusting agent can be included in the core region by adding a refractive index adjusting agent into the source materials for the core region before the polymerization, and carrying out the polymerization of the mixture. The refractive index adjusting agent is now defined as such that raising the refractive index of the polymer when being contained therein as compared with that of a polymer not containing such agent. As described in the International Patent Publication WO93/08488 or Unexamined Japanese Patent Publication No. 5-173026, the refractive index adjusting agent has a solubility parameter which differs by 7 $(cal/cm^3)^{\frac{1}{2}}$ or less from that of the polymer produced by monomer, and a refractive index which differs 0.001 or above from that of the polymer. Any compounds having the foregoing properties, being stably compatible with the polymer, and being stable under polymerization conditions (heating, pressurizing, etc.) for the polymerizable monomer which is a source material are available.

Examples of such available agent include benzyl benzoate (BEN), diphenyl sulfide (DPS), triphenyl phosphate (TPP), benzyl-n-butyl phthalate(BBP), diphenyl phthalate (DPP), biphenyl (DP), diphenylmethane (DPM), tricresyl phosphate (TCP), Diphenyl sulfoxide (DPSO) , and those disclosed in Unexamined Japanese Patent Publication No. 8-110421, where particularly preferable species are BEN, DPS, TPP and DPSO.

The refractive index adjusting agent is preferably a material existing in a solid state at 70 °C or below as described in the Unexamined Japanese Patent Publication No. 08-110420, since it is less likely to diffuse during drawing when there is a need for suppressing the mobility of the refractive index adjusting agent during the drawing.

By controlling concentration and distribution of the refractive index adjusting agent in the core region, the refractive index of the plastic optical fiber can be adjusted at a desired value. The amount of addition thereof may properly be selected typically depending on the applications or on source materials for the core region to be combined. It is to be noted that the refractive index-distributed structure can also be achieved by, in place of using the refractive index adjusting agent, using two or more species of polymerizable monomers for forming the core region and thus producing a distribution of co-polymerization ratio within the core region.

Another possible strategy relates to addition of other additives to the core region and clad region to an extent not degrading the light transmission property. For example, an additive can be added in order to improve the weatherability or durability of the clad region and core region. It is also allowable to add an emission inductive material for amplifying light signal for the purpose of improving the light transmission property. Since even attenuated light signal can be amplified by addition of such compound to thereby elongate the length of transmission, the compound is typically applicable to produce a fiber amplifier at a part of light transmission link. Also these additives can be included in the core region and clad region by being added into the source monomer therefore, and allowing the monomer to polymerize.

There is a trace amount of water contained in the polymerizable monomer as a source material for the clad region and core region, optionally-added additives such as refractive index adjusting agent, and initiator and chain transfer agent used for the polymerization; which water may typically be included in the producing process. The water contained in the source material and the like can be carried into structure of the preform through the process of producing thereof, and the water contained in the preform may generate air bubbles and the like therein during the drawing under heating. Thus in the present invention, it is preferable that the polymerizable monomer, polymerization initiator and other additives are dewatered, and are used only after water contained therein are removed. Possible methods for removing water from the polymerizable monomer include distillation, azeotropic distillation, drying under heating, drying using desiccant, re-crystallization, and any combinations thereof. These methods may properly be selected in consideration of the source material to be dewatered. In the present invention, it is particularly recommendable to dewater the source materials and further purify before use.

Dewatering is preferably carried out by bringing the source monomer into contact with a water-absorptive solid so that water is adsorbed in the solid, and purification is preferably carried out by distillation. Preferable examples of the water-absorbent solid include those of neutral type, such as copper sulfate, magnesium sulfate, sodium sulfate, silica gel and porous synthetic zeolite (Molecular Sieve), where silica gel and Molecular Sieve which can readily be handled are more preferable. Contact with the water-absorbent is preferably effected within an airtight container made of glass or stainless steel at 0°C to room temperature preferably for 6 hours or more, and more preferably 12 hours or more. One possible procedure is such that bringing the source monomer into contact with the water-absorbent solid so as to make such water-absorbent solid absorb the water, separating the water-absorbent solid, and distilling the obtained monomer. The distillation is preferably proceeded under reduced pressure, while not being specifically limited thereto.

The water content in the polymerizable monomer for forming the matrices of the clad region and core region is preferably 0.01 wt% or below, and more preferably 0.005 wt% or below. For the case where two or more monomers are used, it is preferable that each of the monomers respectively has a water content in the foregoing range. The water content of other additives including polymerization initiator is preferably suppressed to 2 wt% or less, and more preferably to 1 wt% or less. For the case where two or more polymerization initiators are used, it is preferable that each of the agents respectively has a water content in the foregoing range.

The water content due to agents other than the monomer preferably accounts for 50 wt% or less of the total water content in the core region and clad region. Although the water content of the source materials and so forth is ideally zero, current technical level may only reach a lower limit of 0.001 wt% or around for the polymerizable monomer, and 0.01 wt% or around for other additives including the polymerization initiator.

Next paragraphs will describe embodiments of the producing method of the present invention.

One embodiment of the present invention is a method comprising a first step of producing a cylinder corresponding to the clad region; a second step (heating polymerization step) of producing a preform which comprises areas respectively corresponded to the core region and clad region by carrying out heating polymerization in the hollow portion of the cylinder; and a third step of processing the obtained preform into various forms;

wherein the polymerization in the second step is carried out at the initial temperature at temperature $T_1$ (°C) which satisfies the relation below, and then at elevated temperature $T_2$ (°C) which satisfies the relation below; and/or

wherein the polymerization in the second step is carried out in the presence of a polymerization initiator having a ten-hour, half-life decomposition temperature $T_h$ (°C) which satisfies the relation below at the initial polymerization temperature $T_1$ (°C) which satisfies the relation below for a period which is equal to or longer than 10% of the half-life of the polymerization initiator at $T_1$ (°C):

$$T_b - 20 \leqq T_h$$
$$T_b - 10 \leqq T_1 \leqq T_g$$
$$T_g \leqq T_2$$
$$T_1 < T_2.$$

In the above relational expressions, $T_b$ is the boiling point (°C) of the polymerizable monomer, and $T_g$ is the glass transition point (°C) of the polymer made of the polymerizable monomer.

In this embodiment, the polymerization temperature during the formation of the area corresponding to the core region is controlled so as to suppress generation of air bubbles and micro-gap in such area, to thereby raise the productivity.

In the first step of this embodiment, a cylinder corresponding to the clad region is obtained. As typically described in International Patent Publication WO93/08488, a monomer as a source material for the clad region is put into a cylindrical polymerization vessel, and then polymerization is carried out while rotating (preferably while keeping the axis of the cylinder horizontally) the vessel to thereby form a cylinder made of a polymer. The source material used herein may be prepolymerized before the polymerization so as to raise the viscosity thereof as described in Unexamined Japanese Patent Publication No. 8-110419.

In the polymerization vessel, it is allowable to put, together with the monomer, a polymerization initiator, chain transfer agent, optionally-added stabilizer and so forth. Using now the materials after being dewatered by the foregoing method is preferable. A preferable range of the amount of addition thereof may properly be determined in consideration of species of the monomer to be employed, where a desirable amount of addition of the polymerization initiator is generally in a range from 0.10 to 1.00 wt% of the monomer, and more preferably in a range from 0.40 to 0.60 wt%, and a desirable amount of addition of the chain transfer agent is generally in a range from 0.10 to 0.40 wt% of the monomer, and more preferably in a range from 0.15 to 0.30 wt%. The water content in the polymerizable composition for forming the clad region, which comprises the foregoing materials, is preferably 0.05 wt% or below, more preferably 0.03 wt% or below, still more preferably 0.02 wt% or below, and most preferably 0.01 wt% or below.

The polymerization temperature and polymerization time may vary with species of the monomer to be employed, where a generally preferable range of the polymerization temperature is 60 to 90°C, and that of the polymerization time is 5 to 24 hours.

For the purpose of completely react the residual monomer and polymerization initiator, it is also allowable after such rotational polymerization to carry out annealing at a temperature higher than the polymerization temperature.

In the first step, it is also possible to produce the structure having a desired shape (cylindrical shape in this embodiment) by molding polymer using known molding technique such as extrusion molding.

In the second step, the monomer as the source material is poured into the hollow portion of the cylinder, which was obtained by the first step, corresponding to the clad region, and the polymerization of the monomer is carried out under heating. It is also allowable to add a polymerization initiator, chain transfer agent, and optional refractive index adjusting agent together with the monomer. All of the materials are preferably dewatered by the methods described in the above. A preferable range of the amount addition thereof may properly be determined typically in consideration of species of the monomer to be employed, where a desirable amount of addition of the polymerization initiator is generally in a range from 0.005 to 0.050 wt% of the monomer, and more preferably in a range from 0.010 to 0.020 wt%, and a desirable amount of addition of the chain transfer agent is generally in a range from 0.10 to 0.40 wt% of the monomer, and more preferably in a range from 0.15 to 0.30 wt%. The water content in the polymerizable composition for forming the core region, which comprises the foregoing materials, is preferably 0.05 wt% or below, more preferably 0.03 wt% or below, and still more preferably 0.02 wt% or below, and most preferably 0.01 wt% or below.

In the second step, the polymerizable monomer poured into the cylinder corresponding to the clad region is polymerized by so-called interfacial sol polymerization process. In the interfacial sol polymerization process, the polymerization of the polymerizable monomer proceeds along the radial direction of the cylinder, corresponding to the clad region, from the inner wall thereof towards the center. For the case where two or more polymerizable monomers are used, the monomer having a higher affinity to the polymer of which the cylinder is made predominantly segregates on the inner wall of the cylinder and then polymerizes, so as to produce a polymer having a higher content of such monomer. Ratio of the high-affinity monomer in the resultant polymer reduces towards the center. This successfully creates the distribution of monomer composition and thus introduces the distribution of refractive index within the area corresponding to the core region.

When the polymerizable monomer added with a refractive index adjusting agent is used in the polymerization, the polymerization proceeds in a way such that the core-forming solution dissolves the inner wall of the clad, and allows the polymer composing such clad to swell to thereby form a gel as described in International Patent Publication WO93/08488. In this process, the monomer having a higher affinity to the polymer, of which the cylinder is made predominantly, exists in larger ratio on the inner wall of the cylinder and then polymerizes, so as to produce on the outer periphery a polymer having a lower content of the refractive index adjusting agent. Ratio of the refractive index adjusting agent in the resultant polymer increases towards the center. This successfully creates the distribution of refractive index adjusting agent and thus introduces the distribution of refractive index within the area corresponding to the core region.

Not only the distribution of refractive index is induced into the area corresponding to the core region through the second step, but also the distribution of thermal behavior since the areas having different refractive indices are also different in the thermal behavior. If the polymerization in the second step is carried out at a constant temperature, the response property against the mass shrinkage which occurs in the polymerization reaction process may vary depending on the thermal behaviors, and thereby air bubbles or micro-gaps may generate in the obtained perform, and drawing under heating of such preform may result in that the obtained fiber has a lot of air bubbles formed therein. If the polymerization in the second step is carried out at too low temperature, the productivity may considerably lower due to low polymerization efficiency, or the light transmission performance of the resultant optical member may lower due to incomplete polymerization. On the contrary, if the polymerization in the second step is carried out at too high initial polymerization temperature, the initial polymerization rate may be so fast that the mass shrinkage of the core region cannot be reduced by a relaxation response, and as a result a lot of air bubbles may generate in the core region.

In the embodiment of the present invention, the initial polymerization temperature is set so temperature $T_1°C$ which satisfies the relation below so as to improve the relaxation response to the mass shrinkage in the initial polymerization.

In the present embodiment, the responsive relaxation property against the mass shrinkage is improved by keeping the initial polymerization temperature to $T_1°C$ which satisfies the relation below so as to reduce the polymerization speed.

It is to be noted that, in the relational expressions below, $T_b$ is the boiling point (°C) of the polymerizable monomer, and $T_g$ is the glass transition point of the polymer made of the polymerizable monomer. The same will apply hereinafter.

$$T_b - 1 \leqq T_1 \leqq T_g$$

In the present embodiment, the polymerization is carried out at $T_1°C$ for a predetermined period, and then further carried out at a temperature $T_2°C$ which satisfies the relations below:

$$T_g \leqq T_2$$
$$T_1 < T_2$$

Completing the polymerization at the elevated temperature $T_2 °C$ successfully prevents the transmissivity of light of the resultant fiber from being degraded, and produces the optical member having an excellent light transmission property. This is also advantageous in that resolving internal fluctuation of the polymer density so as to improve the transparency of the preform, while preventing thermal degradation or depolymerization of the preform. It is to be noted that temperature $T_2°C$ is preferably equal to or higher than $T_g°C$, and equal to or lower than $(T_g + 50)°C$, more preferably equal to or lower than $(T_g + 40)°C$, still more preferably equal to or lower than $(T_g + 30)°C$, and most preferably set around $(T_g + 10)°C$. Temperature $T_2$ lower than $T_g$ will be unsuccessful in fully achieving the foregoing effect. On the contrary, temperature $T_2$ exceeding $(T_g + 50)°C$ tends to undesirably lower the transparency of the preform due to thermal degradation or depolymerization thereof. In particular for the case where the core region having a distributed refractive index is to be formed, this tends to destruct the distribution of refractive index to thereby seriously ruin the performance required for the optical member.

The polymerization at temperature $T_2°C$ is preferably carried out until the reaction absolutely completes so that no polymerization initiator remains. Unreacted portion of the polymerization initiator undesirably remaining in the preform is likely to produce air bubbles or the like in the processing of the preform, in particular in the drawing under fusion, since the residual initiator is heated to decompose, so that it is preferable to complete the reaction of the polymerization initiator. While preferable range of the retention time at temperature $T_2$°C will vary depending on species of the polymerization initiator to be employed, it is recommended to set the retention time equal to or longer than the half-life of the polymerization initiator at $T_2$°C.

In this embodiment, it is also preferable from the same viewpoint to use a compound as a polymerizing initiator, of which ten-hour, half-life decomposition temperature is $(T_b - 20)$°C or above, where $T_b$ (°C) is the boiling point of the polymerizable monomer; and to carry out the polymerization in the presence of the initiator at temperature $T_1$ which satisfies the foregoing relation for a period which is equal to or longer than 10% (more preferably 25%) of the half-life of the polymerization initiator. To carry out the polymerization in the presence of the polymerization initiator having ten-hour, half-life decomposition temperature equal to or higher than $(T_b - 20)$ °C as the polymerization initiator at the initial polymerization temperature $T_1$ can successfully reduce the initial polymerization speed. In addition, to carry out the polymerization at the $T_1$ for a period as long as 10% or more of the half-life of the polymerization initiator can follow the mass shrinkage response in the initial polymerization with pressure. In other words, to carry out polymerization under the foregoing conditions can reduce the initial polymerization speed and can improve the response property against the mass shrinkage, which consequently reduces the introduction of air bubbles into the preform due to the mass shrinkage, and thus raises the productivity. It is to be noted now that ten-hour, half-life decomposition temperature of the polymerization initiator means a temperature at that the polymerization initiator decomposes and reduces to the half amount for ten hours.

For the case where the polymerization initiator which satisfies the foregoing conditions is used, and polymerization is carried out at the initial polymerization temperature $T_1$°C for a period which is equal to or longer than 10% of the half-life of the polymerization initiator, the temperature can be kept at $T_1$°C until the polymerization completes, but raising the temperature from $T_1$°C so as to complete the polymerization is advantageous in that obtaining the optical member having an excellent tranmissivity of light. The elevated temperature is preferably set to $T_2$°C which satisfies the foregoing relation, and more preferable temperature range and more preferable retention time at $T_2$°C are also given in the description above.

For the case where methyl methacrylate (MMA) having boiling point $T_b$ °C is used as the polymerizable monomer in the present embodiment, PBD and PHV can be selected as available ones from the above-listed polymerization initiators such that having ten-hour, half-life decomposition temperature $(T_b - 20)$ °C or above. For the case where MMA is used as the polymerizable monomer and PBD is used as the polymerization initiator, the polymerization is preferably allowed to proceed while keeping the initial polymerization temperature at 100 to 110°C for 48 to 72 hours, and further allowed to proceed at a temperature elevated to 120 to 140°C for 24 to 48 hours. For the case where PHV is used as the polymerization initiator, the polymerization is preferably allowed to proceed while keeping the initial polymerization temperature at 100 to 110°C for 4 to 24 hours, and further allowed to proceed at a temperature elevated to 120 to 140°C for 24 to 48 hours. The temperature elevation may be effected either in a step-wise manner or in a continuous manner, where shorter time for the elevation is preferable.

In the second step, the polymerization may be proceeded under pressure as described in Unexamined Japanese Patent Publication No. 9-269424, or may be proceeded under reduced pressure as described in International Patent Publication WO93/08488. These operations can improve the polymerization efficiency at temperatures $T_1$ and $T_2$ °C which satisfy the foregoing relations and are close to the boiling point of the polymerizable monomer.

In one example of the present embodiment, the second step can be carried out based on polymerization conditions such that keeping temperature $T_1$ °C which satisfies the relation below, and then elevating it to temperature $T_2$ °C which also satisfies the relation below.

$$T_b \leqq T_1 < T_g$$

$$T_g \leqq T_2 \leqq (Tg + 30)$$

In another example of the present embodiment, the second step can be carried out in the presence of a polymerization initiator having ten-hour, half-life decomposition temperature higher than the boiling point of the polymerizable monomer, and by allowing the polymerization to proceed at temperature $T_1$ which satisfies the relation below for a period which is equal to or longer than 25% of the half-life of such polymerization initiator:

$$T_b \leqq T_1 < T_g$$

For the case where the polymerization is carried out under pressure (polymerization carried out under pressure is referred to as "pressurized polymerization", hereinafter) in the second step, it is preferable to place the cylinder, which has pored therein the monomer, in the hollow space of the jig, and to carry out the polymerization while keeping the cylinder as being supported by the jig. While the pressurized polymerization is being carried out in a hollow portion of the structure corresponding to the clad region, the structure is kept as being inserted in the hollow space of the jig, and the jig prevents the shape of the structure from being deformed due to pressure. Although the area corresponding to the core region tends to shrink as the pressurized polymerization proceeds, the structure can uniformly relax the shrinkage of such area corresponding to the core region since the structure is supported in a non-adhered manner while being inserted in the jig, which successfully reduces generation of voids due to shrinkage of the area corresponding to the core region, and contributes to improvement in the productivity of the plastic optical member. In particular for the case where the plastic optical member is intended to have a distributed refractive index, suppression of the morphological changes in the preform can ensure uniform distribution profile of the refractive index, which also ensures the production of the plastic optical fiber having an excellent light transmission property in a highly productive manner.

The jig is preferably shaped as having a hollow space in which the structure can be inserted, and the hollow space preferably has a profile similar to that of the structure. Since the structure corresponding to the clad region is formed in a cylindrical form in the present embodiment, it is preferable that also the jig has a cylindrical form. The jig can suppress deformation of the cylinder during the pressurized polymerization, and supports the cylinder so as to relax the shrinkage of the area corresponding to the core region with the progress of the pressurized polymerization. For the case where the cylinder is supported as being adhered to the jig, the cylinder will be unsuccessful in relaxing the shrinkage of the area corresponding to the core region as described in the above, so that voids tend to generate at the central portion. It is therefore preferable that the jig has a hollow space having a diameter larger than the outer diameter of the cylinder corresponding to the clad layer, and that the jig supports the cylinder corresponding to the clad layer in a non-adhered manner.

The hollow space of the jig preferably has a diameter larger by 0.1 to 40% than the outer diameter of the cylinder corresponding to the clad region, and more preferably larger by 10 to 20 %. Since the jig has a cylindrical form in the present embodiment, the inner diameter of the jig is preferably larger by 0.1 to 40% than the outer diameter of the cylinder corresponding to the clad region, and more preferably larger by 10 to 20%.

The cylinder corresponding to the clad region can be placed in a polymerization vessel while being inserted in the hollow space of the jig. In the polymerization vessel, it is preferable that the cylinder is housed so as to vertically align the height-wise direction thereof. After the cylinder is placed, while being supported by the jig, in the polymerization vessel, the polymerization vessel is pressurized. The pressurizing of the polymerization vessel is preferably carried out using an inert gas such as nitrogen, and thus the pressurized polymerization preferably is carried out under an inert gas atmosphere. While a preferable range of the pressure during the polymerization may vary with species of the monomer, it is generally 0.2 to 1.0 MPa or around. As for the polymerization time, it is generally preferable to set the range thereof to 24 to 96 hours. The polymerization can be carried out under heating, where the heating temperature generally is in a range from 90 to 140°C.

It is preferable in view of improving the productivity that the preform produced by the pressurized polymerization can be separated from the jig and took out even when the preform is adhered on the inner wall of the jig. To smoothly take out the preform, it is preferable to produce an adhesion preventive layer or a lubricating layer on the inner surface of the hollow space of the jig, or in a gap portion formed between the hollow space of the jig and the structure inserted therein. The adhesion preventive layer and the lubricating layer should be inert with regard to the structure corresponding to the clad region, in order to prevent corrosion or other damages from being exerted on the structure. The adhesion preventive layer can be formed by providing silane treatment or Teflon coating on the inner wall of the jig. The lubricating layer can be formed by inserting the cylinder corresponding to the clad region in the jig, and poring a fluid into a gap formed between the cylinder and the inner surface of the jig. The fluid should be inert with regard to the polymer composing the cylinder. The fluid has a boiling point which is preferably equal to or higher than $(T_g + 30)$ °C, where $T_g$ is the glass transition point of the polymer composing the cylinder corresponding to the clad region. Silicone oil is particularly preferable for composing the lubricating layer.

There is no specific limitation on the source materials for the jig, and any materials are available so far as they can withstand the foregoing pressure. While glass may preferably be used, better materials therefore include stainless steel, titanium alloy and aluminum alloy.

Thus-obtained preform has a uniform distribution profile of refractive index and a desirable level of transmissivity of light, wherein air bubbles and micro-gaps are fully suppressed, owing to the control of the polymerization temperature in the second step. This ensures stable production of the plastic optical transmission medium from the preform in a high yield.

In the third step, a desired optical transmission member can be obtained by processing the preform produced in the second step. For example, slicing the preform gives planar lens, and drawing under fusion gives plastic optical fiber. In particular for the case where the core region of the preform is intended to have a distributed refractive index, this process ensures manufacture of the plastic optical fiber having an excellent light transmission property in a highly productive manner.

The drawing is preferably carried out typically by heating the preform by allowing it to pass through a heating oven (cylindrical heating oven, for example), and immediately spinning under drawing the fused preform in a successive manner. In the foregoing first and/or second step, using a polymerizable monomer or polymerization initiator having a reduced water content can considerably reduce the water content which remains in the preform. Thus the generation of air bubbles possibly caused by vaporization of the inner residual water will be less likely to occur even when the preform is heated for drawing. This ensures stable production of the plastic optical fiber from the preform in excellent use efficiency. In particular for the case where the core region of the preform is intended to have a distributed refractive index, this process ensures manufacture of the plastic optical fiber having an excellent light transmission property in a highly productive manner.

While the heating temperature during the drawing may properly be determined in consideration of source material of the preform, a generally preferable range thereof is 180 to 250°C. Conditions for the drawing (drawing temperature, etc.) may properly be determined in consideration of diameter of the obtained preform, desirable diameter of the plastic optical fiber, and source materials used. In particular for the optical fiber having a distributed refractive index, the drawing spinning and heating should be carried out uniformly so as not to ruin the distribution profile of the refractive index which varies along the radial direction. It is therefore preferable to heat the preform using a cylindrical heating oven capable of uniformly heating it in the sectional direction thereof, and to draw the preform into fiber using a draw-spinning apparatus which has an aligning mechanism for keeping the center position constant. The drawing tension can be set to 10 g or above in order to orient molten plastic as described in Unexamined Japanese Patent Publication No. 7-234322, and preferably set to 100 g or below so that strain does not remain after the spinning as disclosed in Unexamined Japanese Patent Publication No. 7-234324. It is also allowable to employ a method having a pre-heating step prior to the drawing.

As for the fiber obtained by the foregoing method, bending property and lateral pressure property thereof can be improved by specifying break elongation and hardness of the obtained element fiber as described in Unexamined Japanese Patent Publication No. 7-7-244220.

The plastic optical fiber after being processed in the third step can directly be subjected, without any modification, to various applications. The fiber may also be subjected to various applications in a form of having on the outer surface thereof a covering layer or fibrous layer, and/or in a form having a plurality of fibers bundled for the purpose of protection or reinforcement.

For the case where a coating is provided to the element wire, the covering process is such that running the element wire through a pair of opposing dies which has a through-hole for passing the element fiber, filling a molten polymer for the coating between the opposing dies, and moving the element fiber between the dies. The covering layer is preferably not fused with the element fiber in view of preventing the inner element fiber from being stressed by bending. In the covering process, the element fiber may be thermally damaged typically through contacting with the molten polymer. It is therefore preferable to set the moving speed of the element fiber so as to minimize the thermal damage, and to select a polymer for forming the covering layer which can be melted at a low temperature range.

The thickness of the covering layer can be adjusted in consideration of fusing temperature of polymer for forming the covering layer, drawing speed of the element fiber, and cooling temperature of the covering layer.

Other known methods for forming the covering layer on the fiber include a method by which a monomer coated on the optical member is polymerized, a method of winding a sheet around, and a method of passing the optical member into a hollow pipe obtained by extrusion molding.

The optical member produced by a method of the present invention is available as an optical fiber cable for use in a system for transmitting light signal, which system comprises various light-emitting element, light-receiving element, other optical fiber, optical bus, optical star coupler, light signal processing device, optical connector for connection and so forth. Any known technologies may be applicable while making reference to "Purasuchikku Oputicaru Faiba no Kiso to Jissai (Basics and Practice of Plastic Optical Fiber)", published by N. T.S. Co. , Ltd.; optical bus typically described in Unexamined Japanese Patent Publication Nos. 10-123350, 2002-90571 and 2001-290055; optical branching/coupling device typically described in Unexamined Japanese Patent Publication Nos. 2001-74971, 2000-32996, 2001-74966, 2001-74968, 2001-318263 and 2001-311840; optical star coupler typically described in Unexamined Japanese Patent Publication No. 2000-241655; light signal transmission device and optical data bus system typically described in Unexamined Japanese Patent Publication Nos. 2002-62457, 2002-101044 and 2001-305395; light signal processor typically described in Unexamined Japanese Patent Publication No. 2002-23011; light signal cross-connection system typically described in Unexamined Japanese Patent Publication No. 2001-8653; optical transmission system typically described in Unexamined Japanese Patent Publication No. 2002-26815; and multi-function system typically described in Unexamined Japanese Patent Publication Nos. 2001-339554 and 2001-339555.

Examples

The present invention will further be detailed referring to preferred Examples. It is to be noted that any materials, reagents, ratio of use and operations described in the Examples below may properly be modified without departing from the spirit of the present invention. Therefore the scope of the present invention is by no means specifically limited to the Examples shown below.

[Example 1]

(Purification of Methyl Methacrylate (MMA))

300g of Molecular Sieve (0.5 nm, product of Kanto Kagaku) was added to 10 L of a commercial MMA (water content = 0.78%) containing a trace amount of p-hydroxybenzoic acid, tightly sealed, and allowed to stand for 2 days. Supernatant MMA was then distilled under reduced pressure at 50 to 60°C so as to remove p-hydroxybenzoic acid, to thereby obtain MMA having a water content reduced to 0.008%. The water content was measured by Karl Fischer's method using MKC510-N5 (product of Kyoto Electronics Producing Co., Ltd.). The same will apply for the description below.

(Purification of Benzoyl Peroxide)

A commercial benzoyl peroxide (a content of water is 25%) was dissolved in chloroform, and the mixture was pored into methanol for re-crystallization. The obtained crystal was obtained by filtration, again dissolved in chloroform, re-crystallized from methanol, filtered, and the obtained crystal was further dried under reduced pressure for 3 days. The obtained benzoyl peroxide was found to have a water content of 0.51%.

(Preparation of Plastic Optical Fiber)

A predetermined amount of the liquid MMA having a water content reduced to as low as 0.008% by the foregoing purification was placed into a sufficiently rigid polymerization vessel which has an inner diameter of 22 mm corresponding to the outer diameter of the preform to be produced and a length of 600 mm. Benzoyl peroxide having a water content reduced to as low as 0.51% by the foregoing purification was added as the polymerization initiator in an amount of 0.5 wt% of MMA, and n-butylmercaptan was added as the chain transfer agent (molecular weight adjusting agent) in an amount of 0.28 wt% of MMA.

The polymerization vessel containing the MMA solution was placed in a water bath at 70°C, and allowed the solution to proceed pre-polymerization with shaking. The polymerization vessel was then laid flat (in a state where the height direction of the cylinder is horizontally aligned) , and the solution was further polymerized under heating in such vessel rotated at a speed of 3,000 rpm at 70°C for 3 hours. The product was annealed at 90°C for 24 hours, to thereby obtain a cylinder made of polymethyl methacrylate (PMMA).

In the hollow portion of the PMMA-made cylinder, an MMA solution, which is a source material for the core region, was directly pored while being filtered through a tetrafluroethylene-made membrane filter with a pore size of 0.2 μm, where the MMA solution contains MMA having the water content thereof reduced to as low as 0.008% by the foregoing purification and 12.5 wt% of diphenyl sulfide as a refractive index adjusting agent. The solution was further added with 0.016 wt%, in a ratio to MMA, of di-$t$-butylperoxide (having a ten-hour, half-life decomposition temperature of 123.7°C) as the polymerization initiator, and 0.27 wt%, in a ratio to MMA, of dodecyl mercaptan as the chain transfer agent.

The PMMA-made cylinder thus pored with the MMA solution is inserted in a glass pipe having an inner diameter larger by 9% than the outer diameter of such PMMA-made cylinder, and allowed to stand vertically in a pressure polymerization vessel. The inner atmosphere of the pressure polymerization vessel is substituted by nitrogen, pressurized to as high as 0.6 MPa, and the content was polymerized at 100°C for 48 hours, which temperature employed herein satisfies the conditions that it should be equal to or higher than $(T_b - 10)$ °C, where $T_b$ is the boiling point of MMA (100°C), and should be equal to or lower than the glass transition point of PMMA ($T_g$ = 110°C, where a temperature profile of the process is shown in Fig. 1. The content was further polymerized at 120°C for 24 hours while keeping the pressurized condition to thereby obtain a preform, which temperature satisfies the relation that it should be equal to or higher than $T_g$ of PMMA, and should be equal to or lower than $(T_g + 40)$°C; and was subsequently annealed.

It is to be noted that the half-life decomposition temperature of di-t-butyl peroxide at 100°C is 180 hours, and that at 120°C is 15 hours.

The obtained preform observed when the polymerization completed was found to have no air bubbles contained therein which possibly introduced by mass shrinkage. The preform was drawn by thermal drawing at 230°C so as to produce a plastic optical fiber having a diameter of approx. 700 to 800 μm. The preform was not found to include air bubbles during the drawing, which contributed to successfully obtain the fiber of 300 m long in a stable manner. Measurements revealed that the obtained fiber has a light transmission loss of as small as 165 dB/km at 650 nm, and a transmission zone of 1.5 GHz for a 100-m fiber.

[Example 2]

The optical fiber was produced similarly to Example 1, except that the polymerization was carried out at 120°C for 48 hours. The obtained preform was found to have air bubbles particularly in the upper portion thereof generated during the drawing, which is caused by incomplete relaxation of the mass shrinkage due to an excessive rise in the initial polymerization rate.

[Example 3]

The optical fiber was produced similarly to Example 1, except that the polymerization temperature was set to 85°C, which is lower than $(T_b - 10)$ °C, where $T_b$ is the boiling point of MMA. The obtained fiber was found to have a light transmission loss of as large as 200 dB/km at 650 nm.

[Example 4]

The optical fiber was produced similarly to Example 1, except that BPO having a ten-hour, half-life decomposition temperature (73.6 °C) lower than $(T_b - 20)$ °C, where $T_b$ is the boiling point of MMA, was used as the polymerization initiator for forming the core region. The preform was found to have air bubbles in the core region in the polymerization stage thereof, so that the resultant fiber also found to have a considerable amount of air bubbles.

[Example 5]

The optical fiber was produced similarly to Example 1, except that the polymerization was carried out while setting the initial polymerization temperature to 100°C for 180 hours, while the temperature was kept. The obtained fiber was found to have a light transmission loss of as large as 300 dB/km at 650 nm.

[Example 6]

The preform was produced similarly to Example 1, except that the polymerization was carried out at temperature $T_2$ exceeding $(T_g + 50)$ °C, while $T_1$ satisfied the relation defined in the above. Some preforms were found to cause deformation or color change due to deterioration when the polymerization of the core was completed. Some of them could not be provided in the drawing step, and even if the preform was provided in the drawing step, a slight degradation in the light transmission loss was observed. An abrupt elevation in the polymerization temperature to temperature $T_2$ also resulted in an excessive diffusion of the refractive index adjusting agent so as to undesirably homogenizes the distribution in the refractive index in the state of preform, so that the resultant 100-m fiber showed a transmission zone of only as low as 500 MHz.

[Example 7]

The preform was produced similarly to Example 1, except that a wide glass pipe having a diameter larger by 60% than the outer diameter of the PMMA-made cylinder was used as the jig. The obtained preform was found to have a morphological change (warp) such that causing deflection of the center axis thereof by maximum 60% of the diameter thereof, due to response to the mass shrinkage and pressurizing during the polymerization. The production efficiency was slightly degraded (to thereby obtain a plastic optical fiber of 250 m long and 700 to 800 mm in diameter) as compared with Example 1 even when the drawing was carried out under center alignment control.

[Example 8]

The optical fiber was produced similarly to Example 1, except that the polymerization was carried out without using the jig. The obtained preform was found to have a morphological change (warp) such that causing deflection of the center axis thereof by as much as approx. 100% of the diameter thereof, due to response to the mass shrinkage and pressurizing during the polymerization. The production efficiency was degraded to a considerable degree (to thereby obtain a plastic optical fiber of only 100 m long and 700 to 800 mm in diameter) even when the drawing was carried out under center alignment control.

[Example 9]

The preform was produced similarly to Example 1, except that the PMMA-made cylinder was made inside the glass pipe as the polymerization vessel, and the preform was succeedingly produced while keeping the PMMA-made cylinder as being housed in the glass pipe. Although the obtained preform was found to be excellent in dimensional stability, the central area of the core region was found to have a distinct response to shrinkage by the time the polymerization completed, which resulted in formation of shrinkage-induced void in the core region over an area ranging from one end of the preform to 30 to 40% of the length thereof, which considerably ruined the preform area to be stretched to yield the fiber. Drawing of the resultant preform at 220 °C yielded a plastic optical fiber of only 200 m long and 700 to 800 m in diameter.

[Example 10]

The plastic optical fiber was produced similarly to Example 1, except that silicone oil (KF-96, product of Shin-Etsu Chemical Co., Ltd.) was filled into a gap portion between the PMMA-made cylinder and the glass pipe as the jig to thereby form an adhesion preventive layer during the pressurized polymerization. While some cases of Example 1 have suffered from adhesion of the preform with glass pipe at the contact site, where some preforms were hard to separate and may have a portion unavailable for the drawing, filling of silicone oil so as to produce the adhesion preventive layer successfully raised the productivity through improving the take-out (separation) property of the preform.

[Example 11]

The plastic optical fiber was produced similarly to Example 1, except that benzoyl peroxide was not purified. It was observed during the drawing that the diameter of the fiber instantaneously fluctuated at points of 200-m and 250-m drawing on the stretched fiber. Observation of the section at these points revealed generation of voids which are ascribable to air bubbles. The length of available fiber was 200 m. The optical fiber showed a light transmission loss of 210 dB/km.

[Example 12]

The plastic optical fiber was produced similarly to Example 1, except that MMA was not dried over Molecular Sieve, and that benzoyl peroxide was not purified. The obtained preform was found to contain, in the vicinity of the boundary between the core region and clad region, a large amount of air bubbles of 0. 5 mm to 3 mm in diameter over an area ranging from the midway of the longitudinal direction thereof to the upper end. In the drawing of such preform, the resultant fiber started to show fluctuation in the diameter at a point of 75-m drawing, and resulted into breakage at a point of 190-m drawing. The obtained fiber was found to have a large amount of voids, and a portion available as the optical fiber only measured less than 50 m. The light transmission loss of the available portion was considerably as large as 1,500 dB/km, which may be caused by microdefects due to non-visible tiny voids in the obtained fiber.

Industrial Applicability

The present invention is applicable to producing of plastic optical member. The producing method of the present invention is advantageous in that producing optical member having excellent properties in a stable manner, which contributes improvement in the productivity of plastic optical member.

**Claims**

1. A method for producing plastic optical member comprising a core region and a clad region differing with each other in refractive index, which comprises a polymerization step of carrying out polymerization of a polymerizable monomer in the presence of a polymerization initiator at an initial polymerization temperature $T_1$ (°C) for a period which is equal to or longer than 10% of the half-life of the polymerization initiator at the initial polymerization temperature $T_1$ (°C), thereby obtaining an area corresponding to said core region, wherein

said initiator has a ten-hour, half-life decomposition temperature $T_h$ (°C) satisfying the relation below; and the initial polymerization temperature $T_1$

(°C)satisfies the relation below:

$$T_b - 20 \leqq T_h$$
$$T_b - 10 \leqq T_1 \leqq T_g$$

(where, $T_b$ is the boiling point (°C) of the polymerizable monomer, and $T_g$ is the glass transition point (°C) of the polymer made of the polymerizable monomer).

2. A method for producing plastic optical member comprising a core region and a clad region differing with each other in refractive index, which comprises a polymerization step of carrying out polymerization of a polymerizable monomer at the initial polymerization temperature $T_1$ (°C) which satisfies the relation below, and at subsequent temperature $T_2$ (°C) which satisfies the relation below, thereby obtaining an area corresponding to said core region:

$$T_g \leqq T_2$$
$$T_1 < T_2$$

(where, $T_g$ is the glass transition point (°C) of the polymer made of the polymerizable monomer).

3. A method for producing plastic optical member comprising a core region and a clad region differing with each other in refractive index, which comprises a polymerization step of carrying out polymerization of a polymerizable monomer under heating in the presence of a polymerization initiator at an initial polymerization temperature $T_1$ (°C) for a period which is equal to or longer than 10% of the half-life of the polymerization initiator at the initial polymerization temperature $T_1$ (°C), and at a subsequent temperature $T_2$ (°C), thereby obtaining an area corresponding to said core region, wherein:

said initiator has a ten-hour, half-life decomposition temperature $T_h$ (°C) satisfying the relation below; and the initial polymerization temperature $T_1$ (°C) and the subsequent temperature $T_2$ (°C) satisfy the relation below:

$$T_b - 20 \leqq T_h$$
$$T_b - 10 \leqq T_1 \leqq T_g$$
$$T_g \leqq T_2$$
$$T_1 < T_2$$

(where, $T_b$ is the boiling point (°C) of the polymerizable monomer, and Tg is the glass transition point (°C) of the polymer made of the polymerizable monomer).

4. The method of claim 2, wherein the temperature $T_2$ is equal to or lower than $T_g + 50$ (°C) .

**5.** The method of claim 2, wherein the polymerization is carried out in the presence of a polymerization initiator at the initial polymerization temperature $T_1$ (°C) for a period which is equal to or longer than 10% of the half-life of the polymerization initiator at the initial polymerization temperature $T_1$ (°C).

**6.** The method of claim 2, wherein the polymerization is carried out in the presence of a polymerization initiator for a period which is equal to or longer than the half-life of the polymerization initiator at temperature $T_2$ (°C).

**7.** The method of claim 1, wherein the content of water contained in the polymerizable monomer is 0.01 wt% or below.

**8.** The method of claim 2, wherein the content of water contained in the polymerizable monomer is 0.01 wt% or below.

**9.** The method of claim 1, wherein the content of water contained in the polymerization initiator is 2 wt% or below.

**10.** The method of claim 2, wherein the polymerization is carried out in the presence of a polymerization initiator; and the content of water contained in the polymerization initiator is 2 wt% or below.

**11.** The method of claim 1, further comprising a step of carrying out polymerization of a polymerizable monomer, thereby obtaining an area corresponding to the polymer-made clad region; wherein the content of water contained in said polymerizable monomer for clad region is 0.01 wt% or below.

**12.** The method of claim 2, further comprising a step of carrying out polymerization of a polymerizable monomer, thereby obtaining an area corresponding to the polymer-made clad region; wherein the content of water contained in said polymerizable monomer for clad region is 0.01 wt% or below.

**13.** The method of claim 1, wherein further comprising a step for producing a structure corresponding to the clad region, said structure being made of a polymer and having a hollow portion; wherein said polymerization is carried out within the hollow portion of said structure, thereby obtaining an area corresponding to the core region.

**14.** The method of claim 2, wherein further comprising a step for producing a structure corresponding to the clad region, said structure being made of a polymer and having a hollow portion; wherein said polymerization is carried out within the hollow portion of said structure, thereby obtaining an area corresponding to the core region.

**15.** The method of claim 1, further comprising a step for producing a structure corresponding to the clad region, said structure being made of a polymer and having a hollow portion; wherein said polymerization is carried out within the hollow portion of said structure, thereby obtaining an area corresponding to the core region, while supporting said structure using a jig which has a hollow space into which said structure can be inserted.

**16.** The method of claim 2, further comprising a step for producing a structure corresponding to the clad region, said structure being made of a polymer and having a hollow portion; wherein said polymerization is carried out within the hollow portion of said structure, thereby obtaining an area corresponding to the core region, while supporting said structure using a jig which has a hollow space into which said structure can be inserted.

**17.** The method of claim 15, wherein the hollow space of said jig has a diameter larger than the outer diameter of said structure by 0.1% to 40%.

**18.** The method of claim 16, wherein the hollow space of said jig has a diameter larger than the outer diameter of said structure by 0.1% to 40%.

**19.** The method of claim 15, wherein said jig has an adhesion preventive layer or a lubricating layer on the inner surface of the hollow space thereof or in a gap portion formed between the hollow space of said jig and said structure inserted therein.

**20.** The method of claim 16, wherein said jig has an adhesion preventive layer or a lubricating layer on the inner surface of the hollow space thereof or in a gap portion formed between the hollow space of said jig and said structure inserted therein.

**21.** The method of claim 1, wherein said area corresponding to the core region has a distribution of refractive index along the radial direction thereof.

**22.** The method of claim 2, wherein said area corresponding to the core region has a distribution of refractive index along the radial direction thereof.

Fig. 1

## INTERNATIONAL SEARCH REPORT

| | International application No. |
|---|---|
| | PCT/JP02/08800 |

**A. CLASSIFICATION OF SUBJECT MATTER**
Int.Cl⁷ G02B6/00, D01F8/10

According to International Patent Classification (IPC) or to both national classification and IPC

**B. FIELDS SEARCHED**

Minimum documentation searched (classification system followed by classification symbols)
Int.Cl⁷ G02B6/00, D01F8/10

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 98/57204 A1 (Boston Optical Fiber, Inc.), 17 December, 1998 (17.12.98), Full text; all drawings (particularly, example 1) | 1-6,13-16, 21,22 |
| Y | Full text; all drawings & JP 2002-505013 A & US 6086999 A & CN 1260050 A | 7-12,17-20 |
| Y | US 4381269 A (Nippon Telegraph & Telephone Public Corp.), 26 April, 1983 (26.04.83), Full text; all drawings & JP 57-84403 A & FR 2493997 A & GB 2089352 A & DE 3144658 A | 7-12 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 November, 2002 (29.11.02) | 17 December, 2002 (17.12.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP02/08800 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2000-111745 A   (Sumitomo Electric Industries, Ltd.),<br>21 April, 2000 (21.04.00),<br>Full text; all drawings (particularly, Par. Nos. [0008], [0042])<br>(Family: none) | 17-20 |
| Y | EP 1116577 A2   (Samsung Electronics Co., Ltd.),<br>18 July, 2001 (18.07.01),<br>Full text; all drawings (particularly, Par. No. [0039])<br>& JP 2001-260143 A      & KR 1070256 A<br>& CN 1304051 A          & US 2001/26875 A1 | 19,20 |
| Y | JP 11-311712 A   (Hitachi Chemical Co., Ltd.),<br>09 November, 1999 (09.11.99),<br>Full text; all drawings (particularly, Par. No. [0029])<br>(Family: none) | 19,20 |
| Y | JP 10-253837 A   (Sumitomo Electric Industries, Ltd.),<br>25 September, 1998 (25.09.98),<br>Full text; all drawings (particularly, Par. Nos. [0013], [0034])<br>(Family: none) | 19,20 |

Form PCT/ISA/210 (continuation of second sheet) (July 1998)